# EUROPÄISCHE PATENTSCHRIFT

(11) **EP 0 516 191 B1**
(45) Veröffentlichungstag und Bekanntmachung des Hinweises auf die Patenterteilung: **08.10.1997**
(21) Anmeldenummer: 92113515.8
(22) Anmeldetag: 23.08.1989
(51) Int. Cl.: A61C 17/06

(54) **Verfahren zur Hintanhaltung von Funktionsstörungen einer zahnärztlichen Absauganlage**
Process for preventing malfunction of a dental evacuation system
Procédé pour empêcher les défaillances d'un système d'aspiration dentaire

(30) Priorität: 25.08.1988 AT 2096/88
(43) Veröffentlichungstag der Anmeldung: 02.12.1992
(62) Teilanmeldung aus: 89909677.0
(73) Patentinhaber: Trawöger, Werner, 6173 Oberperfuss (AT); PREGENZER, Bruno, 6173 Oberperfuss (AT)
(72) Erfinder: Trawöger, Werner, 6173 Oberperfuss (AT); PREGENZER, Bruno, 6173 Oberperfuss (AT)
(74) Vertreter: Hofinger, Engelbert, DDr.

(56) Entgegenhaltungen:
- EP-A- 0 023 036
- EP-A- 0 124 887
- WO-A-86/03669
- DE-A- 2 713 321
- DE-A- 2 814 401
- DE-A- 3 101 954
- DE-A- 3 521 929
- DE-C- 2 802 378
- Beipackzettel der Fa. Cattani S.p.A. zu Antischaumtabletten, die als "ANTISCHIUMOGENO PER ASPIRATORI CHIRURGICI" vor dem Zeitrang vorliegender Anmeldung vertrieben worden sind.

## Beschreibung

Die Erfindung betrifft ein Verfahren zur Hintanhaltung von Funktionsstörungen einer zahnärztlichen Absauganlage, in der mittels Saugluft aus dem Mund des Patienten ein Flüssigkeitsfeststoffgemisch abgesaugt und über eine erste Saugstrecke gefördert wird, die in einem Mundstück beginnt und in einem Abscheider endet, in dem Luft abgetrennt und zur Saugpumpe geführt wird und nach Abtrennung der Luft vorzugsweise auch die Feststoffe aus der Flüssigkeit entfernt werden. Dies erfolgt insbesondere durch Sedimentation in einem abnehmbaren Sammelbehälter, worauf die Flüssigkeit dem Abfluß übergeben wird.

Zahnärztliche Sauganlagen, wie sie beispielsweise in der WO-A-86/03669 beschrieben sind, sind aufgrund der Zusammensetzung des abzusaugenden und zu behandelnden Gemisches (Blut, Speichel, Wasser, Eiter, Zahnmaterial, Amalgamreste, usw.) mit besonderen Problemen behaftet, die zu empfindlichen Funktionsstörungen führen können. Diese Probleme liegen in der Reinigung und in der Desinfektion des vom Gemisch durchströmten Teiles der Anlage, der in weiterer Folge als erste Saugstrecke bezeichnet wird, wobei eine ungenügende Reinigung und Desinfektion dazu führen kann, daß die Anlage abschaltet, da die Sicherung des Auslasses der abgetrennten Saugluft aus dem Abscheider gegen mitströmende Fremdstoffe wirksam wird. Die Zerlegung, Reinigung und Sterilisation eines Abscheiders ist nicht nur zeitaufwendig, sondern auch eine unhygienische Tätigkeit, da das Gemisch eine sehr hohe Bakterienkonzentration aufweist.

Die Erfindung geht nun von der Überlegung aus, daß Funktionsstörungen zumindest hintangehalten werden, wenn die vom Gemisch durchströmten Teile häufiger gereinigt und desinfiziert werden, und hat es sich daher zur Aufgabe gestellt, derartige Funktionsstörungen zumindest so lange zu vermeiden, daß entsprechende Wartungsarbeiten nur gleichzeitig mit einem Service der gesamten Anlage, bei der Entleerung des Sammelbehälters, usw. erforderlich werden.

Gemäß der Erfindung wird dies dadurch erreicht, daß während des Betriebszeitraumes der Absauganlage dem abgesaugten Gemisch im Mundstück als fließfähiges Zusatzmittel ein Desinfektions- und/oder Reinigungsmittel in Intervallen zugegeben wird.

Unter einem fließfähigen Desinfektions- und/oder Reinigungsmittel wird dabei jedes Mittel verstanden, daß zur Behebung zumindest eines der angeführten Probleme geeignet ist. Das Desinfektionsmittel und/oder ein Reinigungsmittel wird portionsweise zugegeben. Derartige Zusatzmittel sind im Handel erhältlich, sodaß auf diese nicht näher einzugehen ist. Das Zusatzmittel wird vorzugsweise aus einer Mischung aller verwendbaren oder benötigten Mittel bestehen.

Die Zugabe des Zusatzmittels kann während des Betriebszeitraumes in gleichmäßigen Intervallen, beispielsweise über ein Uhrwerk viertelstündlich erfolgen. Eine bevorzugte Ausführung sieht jedoch vor, daß durch Erzeugen eines Unterdrucks in der ersten Saugstrecke die Portion des Zusatzmittels eingesaugt wird. Dies findet während des Betriebszeitraumes häufig genug statt, da sich die Sauganlage jeweils beim Abnehmen des Mundstückes von der Geräteablage einschaltet, d. h. annähernd hundert- bis zweihundertmal während einer ganztägigen Ordination. Bei einer derartig häufigen Zugabe kann die jeweils zugeführte Portion des Zusatzmittels auf wenige Tropfen beschränkt werden, sodaß kein übermäßiger Verbrauch erfolgt.

Die Intervallsteuerung kann über eine Steuereinheit erfolgen, wobei die Intervalle wählbar gleichmäßig oder ungleichmäßig sein können. Dies erfordert jedoch einen zusätzlichen Aufwand an Ausrüstungsteilen, wenn die Steuerung elektrisch oder elektronisch erfolgte Die Steuerung einer Dosiereinrichtung durch den Saugluftdruck ist wesentlich einfacher, da durch die oftmalige Schaltung die benötigten Steuerimpulse gegeben sind.

Nachstehend wird nun die Erfindung an Hand der Figuren der beiliegenden Zeichnungen näher beschrieben, ohne darauf beschränkt zu sein.

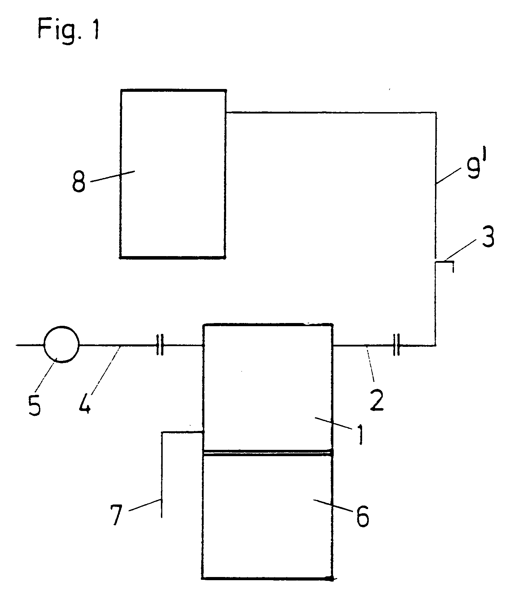

Die Fig. 1 bis 3 zeigen schematische Darstellungen dreier Ausführungen der Erfindung.

Eine zahnärztliche Absauganlage weist gemäß Fig. 1 eine Saugpumpe 5 auf, deren Saugleitung an einem Mundstück 3 eines Saughandstückes ihren Anfang nimmt. Die zur Pumpe 5 führende Saugleitung umfaßt einen ersten Abschnitt 2 zwischen dem Mundstück 3 und dem Abscheider. Im Abscheider 1 findet eine Trennung des durch das Mundstück 3 aufgenommenen Saugluft-Flüssigkeitsfeststoffgemisches statt, wobei die abgetrennte Saugluft über einen zweiten Abschnitt 4 der Saugleitung zur Pumpe 5 gelangt, die Flüssigkeit den Abscheider 1 über die Abflußleitung 7 verläßt, und die Feststoffe in einem abnehmbaren Sammelbehälter 6 gesammelt werden, in dem sie vorzugsweise sedimentieren. Ein Behälter 8 dient zur Aufnahme eines reinigenden und/oder desinfizierenden Zusatzmittels, und ist mit einer Zuleitung 9' versehen, in der eine Dosiereinrichtung 10 enthalten ist, mittels der das Zusatzmittel in Portionen von wenigen Tropfen in das Mundstück 3 zugeführt wird.

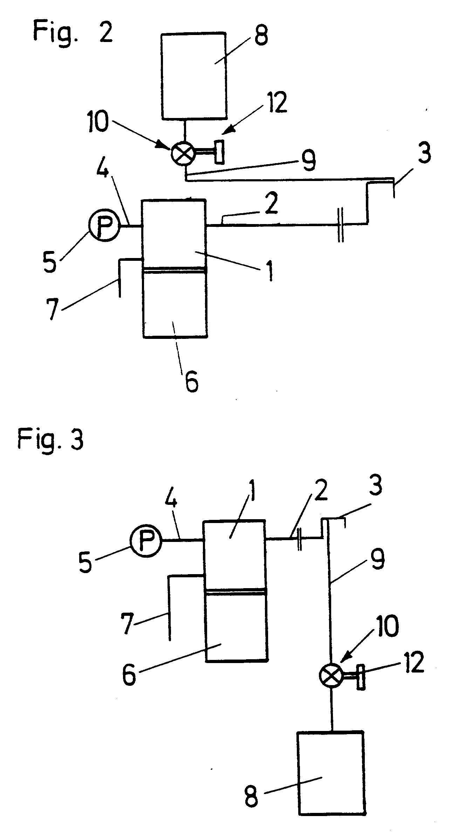

Die Ausnutzung der Druckänderung ist für die Betätigung der Dosiereinrichtung von besonderem Vorteil, da zusätzliche Steuereinrichtungen entfallen. Die Betätigung der Dosiereinrichtung könnte aber ebenso über Magnetventile, bzw. auch mechanisch erfolgen, wobei in diesen Ausführungen auch andere Intervalle als die Schaltintervalle der Absauganlage herangezogen werden können. So könnte die portionierte Zugabe auch mittels einer Schaltuhr in gleichen Abständen erfolgen. Ein Beispiel für eine derartige Ausführung zeigt schematisch Fig. 2. Hier ist der Behälter 8 oberhalb des Abscheiders 1 angeordnet, sodaß das Zusatzmittel durch die Zuleitung 9 unter Schwerkraft zum Mundstück 3 fließen kann, sobald ein Absperrventil 12 beliebiger Art geöffnet und, zeit- oder durchflußmengenabhängig, etwa durch Zählen der Tropfen, wieder geschlossen wird. In dieser Ausführung kann die Zugabe zu jedem beliebigen Zeitpunkt ausgeführt werden.

Eine weitere mittels des Unterdruckes dosierende Ausführung zeigt Fig. 3, wobei hier durch den Unterdruck das Zusatzmittel aus dem unterhalb des Abscheiders 1 liegenden Behälter 8 angesaugt wird, sobald das wiederum zeit- oder durchflußmengengesteuerte Absperrventil 12, das die Dosiereinrichtung 10 bildet, öffnet und schließt. Nach dieser Ausführung kann die Dosierung zu jedem Zeitpunkt während einer Arbeitsphase erfolgen. Durch die Zugabe direkt am Mundstück 3 ist die gesamte, mit Flüssigkeit und Feststoffen in Berührung kommende erste Saugstrecke bis zum Abscheider 1 reinigbar und desinfizierbar.

## Patentansprüche

1. Verfahren zur Hintanhaltung von Funktionsstörungen einer zahnärztlichen Absauganlage, in der mittels Saugluft aus dem Mund des Patienten ein Flüssigkeitsfeststoffgemisch abgesaugt und über eine erste Saugstrecke gefördert wird, die in einem Mundstück (3) beginnt und in einem Abscheider (1) endet, in dem Luft abgetrennt und zur Saugpumpe (5) geführt wird und nach Abtrennung der Luft vorzugsweise auch die Feststoffe aus der Flüssigkeit entfernt werden, dadurch gekennzeichnet, daß während des Betriebszeitraumes der Absauganlage dem abgesaugten Gemisch im Mundstück (3) ein fließfähiges Desinfektionsmittel und/oder Reinigungsmittel in Intervallen zugegeben wird.

2. Verfahren nach Anspruch 1, dadurch gekennzeichnet, daß durch Erzeugen eines Unterdrucks in der ersten Saugstrecke die Portion des Desinfektions- und/oder Reinigungsmittels jeweils in das Mundstück (3) eingesaugt wird.

## Claims

1. Process for preventing functional breakdowns in a dental suction unit, in which a mixture of liquid and solid matter is sucked out of the mouth of the patient by means of suction air and is conveyed over a first suction line which starts at a mouthpiece (3) and ends at a separator (1) in which air is separated and carried to the suction pump (5) and, after the separation of air, preferably also solid matter is removed from the liquid, characterised in that during the operating period of the suction unit, a free-flowing disinfectant and/or cleaning agent is added at intervals to the sucked-off mixture in the mouthpiece (3).

2. Process as claimed in claim 1, characterised in that by producing a negative pressure in the first suction line, the portion of the disinfectant and/or cleaning agent is sucked into the mouthpiece (3).

## Revendications

1. Procédé pour empêcher les défaillances de fonctionnement d'un système d'aspiration dentaire dans lequel un mélange de matières solides et liquides est aspiré depuis la bouche du patient au moyen d'air d'aspiration et est amené sur une première voie d'aspiration qui part d'une pièce buccale (3) et se termine dans un collecteur (1) dans lequel l'air est séparé et conduit jusqu'à une pompe d'aspiration (5) et après séparation de l'air, les matières solides sont de préférence également éliminées du liquide, caractérisé en ce que pendant la durée de fonctionnement du dispositif d'aspiration, un agent désinfectant et/ou un agent nettoyant fluide est ajouté par intervalles au mélange aspiré dans la pièce buccale (3).

2. Procédé selon la revendication 1, caractérisé en ce qu'en produisant une dépression dans la première voie d'aspiration, la partie de l'agent désinfectant et/ou nettoyant est respectivement aspirée dans la pièce buccale (3).
